(19) **Europäisches Patentamt / European Patent Office / Office européen des brevets**

(11) **EP 2 680 048 A1**

(12) **EUROPEAN PATENT APPLICATION**
published in accordance with Art. 153(4) EPC

(43) Date of publication:
01.01.2014 Bulletin 2014/01

(21) Application number: 12750015.5

(22) Date of filing: 20.02.2012

(51) Int Cl.:
G02B 5/30 (2006.01)          B32B 9/00 (2006.01)
G02B 1/11 (2006.01)          G02F 1/1335 (2006.01)

(86) International application number:
PCT/JP2012/054018

(87) International publication number:
WO 2012/115059 (30.08.2012 Gazette 2012/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 22.02.2011 JP 2011035641

(71) Applicant: Asahi Glass Company, Limited
Tokyo 100-8405 (JP)

(72) Inventors:
• OKADA, Shinji
Tokyo 100-8405 (JP)

• AKITA, Yosuke
Tokyo 100-8405 (JP)
• SAKAMOTO, Hiroshi
Tokyo 100-8405 (JP)
• KAIDA, Yuriko
Tokyo 100-8405 (JP)

(74) Representative: Müller-Boré & Partner
Patentanwälte
Grafinger Straße 2
81671 München (DE)

(54) **FINE STRUCTURE FORM AND LIQUID-CRYSTAL DISPLAY DEVICE COMPRISING FINE STRUCTURE FORM**

(57) To provide a fine structure form such as a wire-grid polarizer or an antireflection article having adequate abrasion resistance and optical properties, and a liquid crystal display device comprising such a fine structure form. A fine structure form such as a wire-grid polarizer 1 comprising a substrate having convex stripes 50 formed at a pitch of at most a visible light wavelength on at least one surface thereof, an inorganic oxide layer 30 covering at least the top 52 of the convex stripes 50, and a fluorinated compound layer 32 formed by treating at least the surface of the inorganic oxide layer 30 with a fluorinated compound having a group reactive with the inorganic oxide, wherein the inorganic oxide layer 30 covering the top 52 of the convex stripes 50 has a thickness Ha of at least 30 nm and a ratio of the thickness Ha to the width Dat (i.e. Ha/Dat) of at most 1.0; and a liquid crystal display device comprising such a fine structure form.

Fig. 1

EP 2 680 048 A1

**Description**

TECHNICAL FIELD

The present invention relates to a fine structure form such as a wire-grid polarizer or an antireflection article, and a liquid crystal display device comprising the fine structure form.

BACKGROUND ART

A wire-grid polarizer is known as a polarizer showing a polarization separation function in a visible light region (referred to also as a polarizing element or a polarization separation element) which is useful for an image display device such as a liquid crystal display device, a rear-projection television or a front projector. Further, an antireflection article such as an antireflection film is known as a component to be disposed on the surface of e.g. a display of an image display device so as to prevent reflection of external light on the surface of the display.

A wire-grid polarizer has such a structure that a plurality of fine metal wires are arranged in parallel with one another on an optically transparent substrate. In a case where the pitch of the fine metal wires is sufficiently shorter than the wavelength of incident light, a component of the incident light having an electric field vector perpendicular to the fine metal wires (i.e. p-polarized light) will be transmitted, and a component having an electric field vector parallel with the fine metal wires (i.e. s-polarized light) will be reflected.

In such a wire-grid polarizer, the fine metal wires are very fine, whereby the abrasion resistance of the fine metal wires is low. Therefore, the metal fine wires are subject to breakage by e.g. a physical contact to the surface of the wire-grid polarizer. In the wire-grid polarizer, even slight breakage of the fine metal wires is influential over the performance of the wire-grid polarizer.

Therefore, in order to prevent breakage of the fine metal wires, it has been proposed to cover the fine metal wires with a protective film formed by a CVD method using tetraethoxysilane and oxygen gas (Patent Document 1).

However, such a protective film is formed by a CVD method, i.e. not by a PVD method (such as a sputtering method or a vacuum vapor deposition method) wherein an objective substrate is bombarded with high energy target components or evaporated particles, and therefore, the fine metal wires are poor in adhesion to the protective layer, whereby the protective layer is likely to be peeled off by e.g. a physical contact. It is therefore required to make the thickness of the protective layer relatively thick (to a level of about 200 nm). As a result, the protective film tends to penetrate into spaces between the fine metal wires, and the spaces will be embedded with the protective layer and become small, whereby the optical properties of the wire-grid polarizer will be deteriorated. And, if the optical properties of the wire-grid polarizer are deteriorated, the luminance and the contrast of the liquid crystal display device provided with such a wire-grid polarizer are thereby deteriorated.

On the other hand, as the antireflection article, there is, for example, one having such a structure that fine protrusions so-called a moth-eye structure are formed at a predetermined pitch. In such an antireflection article, the protrusions are very fine; whereby the abrasion resistance of the protrusions is low, and the protrusions are subject to breakage by e.g. a physical contact. Breakage of the protrusions leads to deterioration of the antireflection performance, and therefore, it is desired to develop a technique to prevent such breakage.

PRIOR ART DOCUMENT

PATENT DOCUMENT

Patent Document 1: JP-A-2009-069382

DISCLOSURE OF INVENTION

TECHNICAL PROBLEM

The present invention is to provide a fine structure form such as a wire-grid polarizer or an antireflection article having adequate abrasion resistance and optical properties, and a liquid crystal display device provided with such a fine structure form.

SOLUTION TO PROBLEM

The fine structure form of the present invention comprises a substrate having convex portions formed at a pitch of at most a visible light wavelength on at least one surface thereof, an inorganic oxide layer covering at least the top of the convex portions, and a fluorinated compound layer formed by treating at least the surface of the inorganic oxide layer with a fluorinated compound having a group reactive with the inorganic oxide, wherein the inorganic oxide layer covering the top of the convex portions has a thickness Ha of at least 30 nm and a ratio of the thickness Ha to the width Dat (i.e. Ha/Dat) of at most 1.0.

It is preferred that the inorganic oxide layer covers at least a part of a side surface of the convex portions, and the inorganic oxide layer covering the side surface has a ratio of the thickness Da in the width direction to the width Dat (i.e. Da/Dat) of at most 0.25.

The fluorinated compound layer preferably has a thickness Hf of from 1 to 30 nm.

The fluorinated compound preferably has a hydrolysable silyl group and a fluoroalkyl group (which may have an etheric oxygen atom between carbon-carbon atoms).

The wire-grid polarizer of the present invention is a wire-grid polarizer comprising the fine structure form of the present invention, wherein the convex portions are convex stripes formed in parallel with one another, and on at least the top of the convex stripes, a plurality of fine metal wires made of a metal layer and separated from one another, are formed.

The antireflection article of the present invention comprises the fine structure form of the present invention.

The antireflection article of the present invention comprises the fine structure form of the present invention, wherein the substrate preferably has a moth-eye structure.

In the antireflection article of the present invention, the substrate is preferably an optically transparent substrate.

The liquid crystal display device of the present invention comprises the fine structure form of the present invention.

For example, the liquid crystal display device of the present invention comprises a liquid crystal panel having a liquid crystal layer interposed between a pair of substrates, a backlight unit, and the wire-grid polarizer of the present invention.

ADVANTAGEOUS EFFECTS OF INVENTION

According to the present invention, it is possible to provide a fine structure form such as a wire-grid polarizer or an antireflection article having adequate abrasion resistance and optical properties, and a liquid crystal display device provided with such a fine structure form.

BRIEF DESCRIPTION OF DRAWINGS

Fig. 1 is a perspective view illustrating an example of the wire-grid polarizer.
Fig. 2 is a perspective view illustrating another example of the wire-grid polarizer.
Fig. 3 is a perspective view illustrating the optically transparent substrate for the wire-grid polarizer in Fig. 2.
Fig. 4 is a perspective view illustrating another example of the wire-grid polarizer.
Fig. 5 is a perspective view illustrating the optically transparent substrate for the wire-grid polarizer in Fig. 4.
Fig. 6 is a cross-sectional view illustrating an example of the liquid crystal display device of the present invention.
Fig. 7 is a cross-sectional view illustrating an example of the antireflection article of the present invention.

DESCRIPTION OF EMBODIMENTS

The fine structure form of the present invention comprises a substrate having convex portions formed at a pitch of at most a visible light wavelength on at least one surface thereof, an inorganic oxide layer covering at least the top of the convex portions, and a fluorinated compound layer formed by treating at least the surface of the inorganic oxide layer with a fluorinated compound having a group reactive with the inorganic oxide, wherein the inorganic oxide layer covering the top of the convex portions has a thickness Ha of at least 30 nm and a ratio of the thickness Ha to the width Dat (i.e. Ha/Dat) of at most 1.0.

The fine structure form of the present invention may, for example, be an optical fine structure form such as a wire-grid polarizer or an antireflection article.

In the present invention, convex portions are meant for portions rising from the main surface of a substrate, wherein the rising extends in one direction. The convex portions may be integral with the main surface of the substrate and may be made of the same material as the main surface portion of the substrate, or they may be made of a material different from the main surface portion of the substrate. Otherwise, the convex portions may be constituted by base portions made of the same material as the main surface portion of the substrate and upper portions formed on the base portions and made of a material different from the main surface portion of the substrate.

The convex portions may, for example, be convex stripes extending in a direction along with the plane direction of the substrate and formed in parallel with one another at a predetermined pitch of at most a wavelength of visible light; or protrusions made in the form of a cone such as a circular cone or a pyramid, or a frustum based on such a cone (i.e. one having the top portion of a cone removed from the cone) and formed at a predetermined pitch of at most a wavelength of visible light.

For example, a wire-grid polarizer has convex stripes as the convex portions, and an antireflection article has protrusions in the form of a cone or a frustum based on the cone, as the convex portions.

In the case where the convex portions are convex stripes, a pitch is a sum of the width of a convex stripe (the length in a direction parallel with the main surface of the substrate and in a direction perpendicular to the length direction of the convex stripe) and the width of a groove formed between adjacent convex stripes.

In the case where the convex portions are protrusions, a pitch is a distance between the bottom centers of the protrusions closest to each other.

In a convex stripe, it is preferred that the shape of its cross-section in a direction perpendicular to its length direction and to the main surface of the substrate, is substantially constant in its length direction, and also in a plurality of convex stripes, their cross-sectional shapes are preferably all substantially constant. The cross-sectional shape of a convex stripe may, for example, be a shape having substantially the same width from the bottom (the main surface of the substrate) up to the top, or a shape having the width gradually narrowed from the bottom toward the top. Specifically, it may, for example, be rectangular, triangular or trapezoidal. Such a cross-sectional shape may be such that a corner or side (side surface, top surface (top and bottom surfaces)) is curved.

The protrusions are preferably such that the shape of each protrusion is substantially constant. Further, the cross-sectional shape may be such that a corner or side (side surface, top surface (top and bottom surfaces)) is curved.

In the present invention, the top means, in the case of a convex stripe, such a portion that the highest portion in the above cross-sectional shape continues in the length direction. The top of a convex stripe may be a face or a line. Further, in the case of a protrusion, the top is the highest portion of each protrusion. The top of a protrusion may be a face or a spot.

In the present invention, the surface other than the top of a convex portion is referred to as a side surface. Further, the flat portion between the adjacent two convex portions is regarded as the main surface of the substrate i.e. not as the surface of the convex portion.

<Wire-grid polarizer>

[Substrate]

A substrate provided with the wire-grid polarizer of the present invention, comprises an optically transparent substrate and a plurality of fine metal wires arranged in parallel with one another on the optically transparent substrate. Such a substrate may, for example, be a substrate comprising an optically transparent flat substrate and convex stripes made of fine metal wires, formed thereon, or a substrate comprising an optically transparent substrate having base portions of convex stripes (hereinafter referred to as convex base portions) formed, and fine metal wires constituting upper portions of the convex stripes (hereinafter referred to as convex upper portions) formed on the convex base portions of the optically transparent substrate. At least the top of convex portions of the wire-grid polarizer is made of a metal layer, whereby a plurality of fine metal wires are formed as separated from one another.

(Optically transparent substrate)

The optically transparent substrate has optical transparency in a wavelength range to be used for the wire-grid polarizer. Optical transparency means to transmit light, and the wavelength range to be used, is specifically a range of from 400 nm to 800 nm.

The material for the optically transparent substrate may, for example, be a photocured resin, a thermoplastic resin or glass. A photo-cured resin or a thermoplastic resin is preferred in that it is thereby possible to form convex base portions by the after-mentioned imprinting method. A photo-cured resin is particularly preferred in that it is thereby possible to form convex base portions by an optical imprinting method, and it is excellent in heat resistance and durability. From the viewpoint of the productivity, the photo-cured resin is preferably a photo-cured resin obtainable by photo-curing a photo-curable composition which is photo-curable by photo-controlled radical polymerization.

The optically transparent substrate may be a laminate. Such a laminate may, for example, be one comprising a base material made of e.g. a thermoplastic resin or glass, and a surface layer having convex base portions made of a photo-cured resin, formed on the surface of the base material.

In a convex base portion, it is preferred that the shape of its cross-section in a direction perpendicular to its length direction and to the main surface of the substrate is substantially constant in the length direction, and also in the plurality of convex base portions, their cross-sectional shapes are preferably all substantially constant. The cross-sectional shape of a convex base portion may, for example, be a shape having substantially the same width from the bottom (the main surface of the substrate) up to the top of the convex base portion, or a shape having the width gradually narrowed from the bottom toward the top. Specifically, the cross-sectional shape may, for example, be rectangular, triangular or trapezoidal. Such a cross-sectional shape may have a corner or side (side surface) curved.

(Fine metal wires)

The fine metal wires may be ones formed by patterning a metal layer made of a metal or metal compound formed on the surface of a flat optically transparent substrate. In this case, fine metal wires formed by the patterning constitute convex stripes of the substrate. The fine metal wires may also be ones obtained by forming metal layers made of a metal or metal compound selectively on the surfaces of a plurality of convex base portions formed on a surface of an optically transparent substrate in parallel to one another and at a predetermined pitch via flat portions formed between the convex base portions. In this case, the convex stripes of the substrate are constituted by the convex upper portions made of the fine metal wires and the convex base portions of the optically transparent substrate.

The plurality of fine metal wires may be formed substantially in parallel and may not be formed completely in parallel. A wire constituting each fine metal wire is preferably a straight wire whereby an optical anisotropy in-plane can easily be obtained, but may be a curved wire or bent wire to such an extent that it will not be in contact with the adjacent wires.

In a case where a metal layer is formed on the surface of a convex base portion, a fine metal wire is constituted by the metal layer extending in the length direction of the convex base portion. The metal layer may cover at least a part of the surface of a convex base portion so long as it is substantially continuous in the length direction and so long as there is no discontinuous portion other than fine defects. At that time, the metal layer may cover a part or whole of the top of the convex base portion, or may cover whole of the top of the convex base portion and a part or whole of the 2nd side surface of the convex base portion. Further, the metal layer may cover a part of the flat portion between the adjacent two convex base portions. The top of a convex base portion is meant for such a portion that the highest portion in the cross-sectional shape of the convex base portion continues in the length direction. The top of a convex base portion may be a face or line.

The metal may, for example, be a metal simple substance, an alloy or a metal containing a dopant or impurity. Specifically, aluminum, silver, chromium, magnesium, an aluminum type alloy or a silver type alloy may be mentioned.

The material for the fine metal wires is preferably aluminum, an aluminum type alloy, silver, chromium or magnesium, particularly preferably aluminum or an aluminum type alloy, since it has high reflectance to visible light, little absorption of visible light and high electrical conductivity.

[Inorganic oxide layer]

The inorganic oxide layer is a layer covering at least the top of the convex stripes of the substrate. The inorganic oxide layer may cover at least a part of two side surfaces of each convex stripe, or the surface of the substrate between the convex stripes (the flat portion between the convex stripes). However, even in a case where it covers only the top of the convex stripes, adequate effects (abrasion resistance and optical properties) can be obtained.

The inorganic oxide layer is preferably formed to have a void space (a groove) formed between convex stripes i.e. so that the void space (the groove) between convex stripes will not be embedded as far as possible, from the viewpoint of the optical properties.

The material for the inorganic oxide layer may, for example, be silicon oxide, zirconium oxide, tin oxide, titanium oxide or aluminum oxide. Silicon oxide, zirconium oxide or tin oxide is preferred in that a wire-grid polarizer will thereby exhibit high transmittance in a short wavelength region, and silicon oxide is particularly preferred from the viewpoint of costs.

The thickness Ha (in the height direction of convex stripes) of the inorganic oxide layer covering the top of the convex stripes, is preferably at least 30 nm and at most 150 nm. Further, when this thickness Ha is from 40 to 100 nm, the abrasion resistance of the convex stripes will be excellent. Here, Ha is a difference between the height of the top of the convex stripes based on the flat portion between convex stripes, and the height of the top of the inorganic oxide layer likewise based on the flat portion between convex stripes.

Further, the ratio of the thickness Ha of the inorganic oxide layer covering the top of the convex stripes to the width Dat of the inorganic oxide layer covering the top of the convex stripes (i.e. Ha/Dat) is at most 1.0. The ratio (i.e. Ha/Dat) is preferably from 0.4 to 0.8. When the ratio (i.e. Ha/Dat) is at most 1.0, the inorganic oxide layer covering the top of the convex stripes will not be damaged and will serve to increase the abrasion resistance of the convex stripes. Here, Dat is the width of the inorganic oxide layer which is present above the top of the convex stripes to cover the top, and is the maximum width in a case where the width is different in the height direction of the inorganic oxide layer.

The inorganic oxide layer may cover, in addition to the top of the convex stripes, two side surfaces of each stripe or one side surface out of the two side surfaces. Further, it may cover a part of such side surfaces. The ratio of the thickness Da in the width direction of the inorganic oxide layer covering the side surface to the above width Dat (i.e. Da/Dat) is preferably at most 0.25. The ratio (i.e. Da/Dat) is more preferably at most 0.2. When the ratio (i.e. Da/Dat) is at most 0.25, an adequate void space (groove) will be formed between convex stripes, whereby it is possible to increase the abrasion resistance of the convex stripes while maintaining the optical properties of the wire-grid polarizer to be good. Here, when the entire height of a convex stripe is represented by H', Da is a thickness in a width direction of the inorganic oxide layer covering the side surface at a position corresponding to a half of the height (H'/2). In a case where the two side surfaces are covered by the inorganic oxide layer, it is preferred that both side surfaces are covered so that the respective thicknesses Da at both side surfaces satisfy the ratio (Da/Dat)$\leqq$0.25.

[Fluorinated compound layer]

The fluorinated compound layer is a layer formed by treating the surface of the inorganic oxide layer with a fluorinated compound having a group reactive with the inorganic oxide, and it covers the entire surface of the inorganic oxide layer. For example, in a case where the fluorinated compound is a fluorinated compound having the after-described hydrolysable silyl group and fluoroalkyl group, the fluorinated compound layer is constituted by a hydrolytic condensate of such a fluorinated compound.

The group reactive with the inorganic oxide may, for example, be a silanol group or a hydrolysable silyl group. From the viewpoint of the reactivity with the inorganic oxide, a hydrolysable silyl group is particularly preferred. The hydrolysable silyl group is a group having an alkoxy group, an amino group, a halogen atom, etc. bonded to a silicon atom and a group capable of cross-linking by forming a siloxane bond by hydrolysis. A trialkoxysilyl group, an alkyldialkoxysilyl group or the like is preferred.

The fluorinated compound is preferably a fluorinated compound having a hydrolysable silyl group and a fluoroalkyl group (which may have an etheric oxygen atom between carbon-carbon atoms) from the viewpoint of the reactivity with the inorganic oxide and a low dynamic friction coefficient.

The dynamic friction coefficient of the fluorinated compound layer is preferably at most 0.2, more preferably at most 0.15, from the viewpoint of the abrasion resistance.

The dynamic friction coefficient of the fluorinated compound layer is measured in accordance with ASTM D 1894.

<Processes for producing wire-grid polarizer>

As processes for producing a wire-grid polarizer, the following processes ($\alpha$) and ($\beta$) may be mentioned, which are different in the method for forming fine metal wires.

Process ($\alpha$): a process comprising the following steps (I) to (III)

(I) A step of forming a substrate by forming a metal layer on the surface of a flat optically transparent substrate and patterning the metal layer to form a plurality of fine metal wires arranged in parallel with one another at a predetermined pitch.

(II) A step of forming an inorganic oxide layer by vapor-depositing an inorganic oxide on the side of the substrate having the fine metal wires formed.

(III) A step of forming a fluorinated compound layer by treating the surface of the inorganic oxide layer with a fluorinated compound having a group reactive with the inorganic oxide.

In the case of the process ($\alpha$), the fine metal wires formed in step (I) become convex stripes of the substrate.

Process ($\beta$): a process comprising the following steps (I'), (II) and (III)

(I') A step of forming a substrate by preparing an optically transparent substrate having a plurality of convex base portions formed in parallel with one another at a predetermined pitch on its surface and vapor-depositing a metal or metal compound selectively on the surface of the convex base portions to form a plurality of fine metal wires arranged in parallel with one another.

(II) A step of forming an inorganic oxide layer by vapor-depositing an inorganic oxide on the side of the substrate having the fine metal wires formed.

(III) A step of forming a fluorinated compound layer by treating the surface of the inorganic oxide layer with a fluorinated compound having a group reactive with the inorganic oxide.

In the case of the process ($\beta$), the convex stripes of the substrate are constituted by the convex base portions of the optically transparent substrate and the fine metal wires (convex upper portions).

[Process ($\alpha$)]

(Step (I))

The fine metal wires are formed by forming a metal layer on the surface of a flat optically transparent substrate and pattering the metal layer.

The method for forming a metal layer may, for example, be a vapor deposition method. The vapor deposition method may, for example, be a PVD method or a CVD method. From the viewpoint of the adhesion between the optically transparent substrate and the fine metal wires and the surface roughness of the fine metal wires, a PVD method (such as a vacuum vapor deposition method, a sputtering method or an ion plating method) is preferred, and from the viewpoints of costs, a vacuum vapor deposition method is particularly preferred.

The patterning is carried out by forming a resist pattern on the surface of the metal layer, and carrying out etching by using the resist pattern as a mask to remove an excess metal layer, followed by removing the resist pattern.

(Step (II))

The inorganic oxide layer is formed by vapor-depositing an inorganic oxide on the side of the substrate having the fine metal wires formed.

The vapor deposition method may be a PVD method or a CVD method. From the viewpoint of the adhesion between the optically transparent substrate and the fine metal wires and the surface roughness, a PVD method (such as a vacuum vapor deposition method, a sputtering method or an ion plating method) is preferred, and a sputtering method is particularly preferred. For example, in the case of a sputtering method, it is possible to control the thickness Ha and the width Dat of the inorganic oxide layer to be formed, by adjusting the sputtering treatment time. The width Dat also depends on the width and height of convex stripes, the form of the top of convex stripes, the pitch, etc. Therefore, it is possible to control the thickness Ha of the inorganic oxide layer covering the top of convex stripes to be at least 30 nm and preferably at most 150 nm and the ratio (Ha/Dat) to be at most 1.0 by suitably adjusting the sputtering treatment time, the width and height of convex stripes, the form of the top of convex stripes, the pitch, etc.

(Step (III))

The fluorinated compound layer is formed by treating the surface of the inorganic oxide layer with a fluorinated compound having a group reactive with the inorganic oxide.

For example, in a case where the fluorinated compound is a fluorinated compound having a hydrolysable silyl group and a fluoroalkyl group, the treating method is preferably carried out via the following steps (i) to (iii), since it is thereby possible to form a uniform and thin fluorinated compound layer.

(i) A step of immersing the substrate having the fine metal wires and the inorganic oxide layer formed thereon, in a diluted solution of the fluorinated compound.
(ii) A step of withdrawing the substrate from the diluted solution of the fluorinated compound, followed by rinsing the substrate with a solvent.
(iii) A step of forming a fluorinated compound layer by placing the substrate after rinsing under a constant temperature and constant humidity condition to hydrolyze the hydrolysable silyl group for condensation.

The condensation degree of the fluorinated compound layer and the inorganic oxide layer can be controlled, for example, by adjusting the concentration of the diluted solution to be used in step (i), the constant temperature and constant humidity condition and the time.

[Process (β)]

(Step (I'))

The method for preparing the optically transparent substrate may, for example, be an imprinting method (such as an optical imprinting method or a thermal imprinting method) or a lithography method. An imprinting method is preferred in that convex base portions can be formed with good productivity and the optically transparent substrate can be made to have a large area, and an optical imprinting method is particularly preferred in that convex base portions can be formed with good productivity and grooves of the mold can precisely be transferred.

The optical imprinting method is a method wherein a mold having a plurality of grooves formed in parallel with one another at a predetermined pitch, is prepared, for example, by a combination of electron beam drawing and etching, and the grooves of the mold are transferred to the photocurable composition applied to the surface of an optional substrate and at the same time, the photocurable composition is photo-cured.

Specifically, the preparation of the optically transparent substrate by the optical imprinting method is preferably carried out via the following steps (i) to (iv).

(i) A step of applying a photocurable composition to a surface of a base material.
(ii) A step of pressing a mold having a plurality of grooves formed in parallel with one another at a predetermined pitch, against the photocurable composition so that the grooves are contacted with the photocurable composition.
(iii) A step of applying radiation (such as ultraviolet ray or electron ray) in such a state that the mold is pressed against the photocurable composition to cure the photocurable composition thereby to prepare an optically transparent substrate having a plurality of convex base portions corresponding to the grooves of the mold.
(iv) A step of removing the mold from the optically transparent substrate.

Further, one having a surface layer with convex base portions and a base material integrated, may be used as the optically transparent substrate, or one having a surface layer with convex base portions separated from a base material, may be used as the optically transparent substrate. Otherwise, after forming a metal layer, a surface layer with convex base portions, may be separated from the base material.

Specifically, the preparation of the optically transparent substrate by the thermal imprinting method is preferably carried out via the following steps (i) to (iii).

(i) A step of forming a transfer layer of a thermoplastic resin on the surface of a base material, or a step of preparing a transfer film of a thermoplastic resin.
(ii) A step of pressing a mold having a plurality of grooves formed in parallel with one another at a predetermined pitch, against the transfer layer or the transfer film heated to at least the melting point (Tm) or the glass transition temperature (Tg) of the thermoplastic resin so that the grooves are contacted with the transfer layer or the transfer film, to prepare an optically transparent substrate having a plurality of convex base portions corresponding to the grooves of the mold.
(iii) A step of cooling the main body of the optically transparent substrate to a temperature lower than Tg or Tm and removing the mold from the optically transparent substrate.

Further, one having a surface layer with convex base portions and a base material integrated, may be used as the optically transparent substrate, or one having a surface layer with convex base portions separated from a base material, may be used as the optically transparent substrate. Otherwise, after forming a metal layer, a surface layer with convex base portions, may be separated from the base material.

The material for the mold to be used for the imprinting method may, for example, be silicon, nickel, quartz glass or a resin. From the viewpoint of the transfer precision, quartz glass or a resin is preferred. The resin may, for example, be a fluorinated resin (such as an ethylene/tetrafluoroethylene copolymer), a cyclic olefin, a silicone resin, an epoxy resin or an acrylic resin. From the viewpoint of the precision of the mold, a photocurable acrylic resin is preferred. The resin mold preferably has an inorganic film having a thickness of from 2 to 10 nm on the surface, from the viewpoint of the durability against repeated transfer. The inorganic film is preferably an oxide film of e.g. silicon oxide, titanium oxide or aluminum oxide.

The base material to be used for the imprinting method, may, for example, be a glass sheet (such as a quartz glass sheet or an alkali-free glass sheet) or a film made of a resin (such as polyethylene terephthalate, polybutylene terephthalate, polyethylene naphthalate, polydimethylsiloxane or a transparent fluororesin). In a case where a glass sheet is used as the base material, the imprinting method may be carried out by a sheet-fed printing system, and in a case where a film is used as the base material, the imprinting method may be carried out by a roll-to-roll system.

The fine metal wires are formed by vapor-depositing a metal or metal compound selectively on the surface of the convex base portions of the optically transparent substrate.

The vapor deposition method may be a PVD method or a CVD method. A vacuum vapor deposition method, a sputtering method or an ion plating method is preferred, and a vacuum vapor deposition method is particularly preferred. As the vapor deposition method, an oblique vapor deposition method by a vacuum vapor deposition method is most preferred, since it is thereby possible to control the incident direction of vaporized particles to the optically transparent substrate and to vapor-deposit a metal or metal compound selectively on the surface of convex stripes.

(Steps (II) to (III))

Steps (II) to (III) may be carried out in the same manner as steps (II) to (III) in the process ($\alpha$).

<Embodiments of wire-grid polarizer>

Now, embodiments of the wire-grid polarizer of the present invention will be described with reference to the drawings. The following drawings are schematic views, and real wire-grid polarizers are not theoretical and ideal shapes as shown in the drawings. For example, in real wire-grid polarizers, there are certain disorders in shapes of e.g. fine metal wires, convex stripes, etc.

Further, in this invention, each size is a value obtained by measuring each size with respect to optional five positions in a transmission electron microscopic (TEM) image of the cross section of a wire-grid polarizer and then averaging it.

[First embodiment]

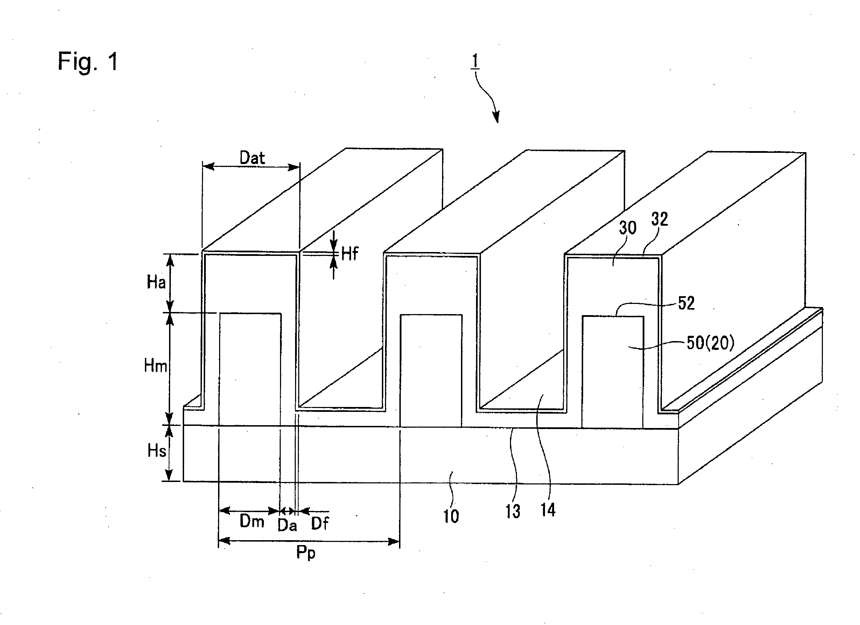

Fig. 1 is a cross-sectional view illustrating a first embodiment of the wire-grid polarizer of the present invention. The wire-grid polarizer 1 comprises a substrate comprising a flat optically transparent substrate 10 and convex stripes 50 made of a plurality of fine metal wires 20 with an rectangular cross-sectional shape formed in parallel with one another at a predetermined pitch Pp of at most a wavelength of visible light, on the surface of the optically transparent substrate 10; an inorganic oxide layer 30 covering two side surfaces of each convex stripe 50 and a top 52 interposed therebetween, and a flat portion 13 of the substrate between convex stripes 50, so that a void space is formed at a groove 14 between convex stripes 50; and a fluorinated compound layer 32 formed by treating the entire surface of the inorganic oxide layer 30 with a fluorinated compound having a group reactive to the inorganic oxide.

The following first to third embodiments show examples wherein the inorganic oxide layer 30 covers two side surfaces of each convex stripe 50 and a top 52 interposed therebetween, and a flat portion 13 of the substrate between convex stripes 50, but the inorganic oxide layer may cover only the top of convex stripes, and even in such a case, excellent abrasion resistance and optical properties can adequately be obtainable.

Pp is a sum of the width Dm of a convex stripe and the width of a groove 14 to be formed between convex stripes 50. Pp is at most a wavelength of visible light, preferably from 30 to 300 nm, more preferably from 50 to 200 nm. When Pp is at most 300 nm, a high s-polarization reflectance is obtainable, and a high polarization degree is obtainable even in a short wavelength region of about 400 nm. Further, a coloration phenomenon by diffraction can be prevented. Further, when Pp is at least 30 nm, a high transmittance is obtainable.

The ratio of Dm to Pp (i.e. Dm/Pp) is preferably from 0.1 to 0.7, more preferably from 0.25 to 0.55. When Dm/Pp is at least 0.1, a high polarization degree is obtainable. By adjusting Dm/Pp to be at most 0.7, coloration of transmitted light by interference can be prevented.

Dm is preferably from 10 to 100 nm, since fine metal wires 20 can thereby easily be formed.

The ratio of the sum (Da+Df) of the thickness (in the width direction of a convex stripe 50) Da of the inorganic oxide layer 30 covering a side surface of a convex stripe 50 and the thickness (in the width direction of a convex stripe) Df of the fluorinated compound layer 32 covering the inorganic oxide layer 30, to the width of a groove (Pp-Dm) (i.e. (Da+Df)/(Pp-Dm)) is preferably at most 0.4, more preferably from 0.01 to 0.3. When (Da+Df)/(Pp-Dm) is at most 0.4, an adequate void space is formed at the groove 14, and the optical properties will be better.

The thickness (in the height direction of a convex stripe) Ha of the inorganic oxide layer 30 covering the top 52 of each convex stripe 50 is at least 30 nm, as mentioned above. Further, the ratio of the thickness Ha of the inorganic oxide layer 30 covering the top 52 of each convex stripe 50 to the width Dat of the inorganic oxide layer 30 (i.e. Ha/Dat) is at most 1.0, as mentioned above.

The ratio of the thickness Da (in the width direction of a convex stripe 50) of the inorganic oxide layer 30 covering a side surface of a convex stripe 50 to the above width Dat (i.e. Da/Dat) is preferably at most 0.25, as mentioned above.

As mentioned above, when the entire height of a convex stripe is represented by H' (=Hm), Da is the thickness in the width direction of the inorganic oxide layer covering a side surface, at a position corresponding to a half (H'/2) of the height of the convex stripe. Here, in the illustrated embodiment, Da is constant in the height direction, but it may not be constant.

The height Hm of convex stripes 50 made of fine metal wires 20 is preferably from 50 to 500 nm, more preferably from 100 to 300 nm. When Hm is at least 50 nm, the polarization separation function will be sufficiently high. When Hm is at most 500 nm, wavelength dispersion will be small. Further, when Hm is from 100 to 300 nm, fine metal wires 20 can be easily formed.

The thickness (in the height direction of a convex stripe 50) Hf of the fluorinated compound layer 32 covering the inorganic oxide layer 30 covering the top of a convex stripe 50, is preferably from 1 to 30 nm, more preferably from 1 to 20 nm. When Hf is at least 1 nm, the abrasion resistance will be sufficiently high. When Hf is at most 30 nm, it is easy to form a uniform and thin fluorinated compound layer 32.

The thickness Hs of the optically transparent substrate 10 is preferably from 0.5 to 1,000 $\mu$m, more preferably from 1 to 200 $\mu$m.

(Process for producing wire-grid polarizer)

The wire-grid polarizer 1 can be produced by the above-described process ($\alpha$).

[Second embodiment]

(Wire-grid polarizer)

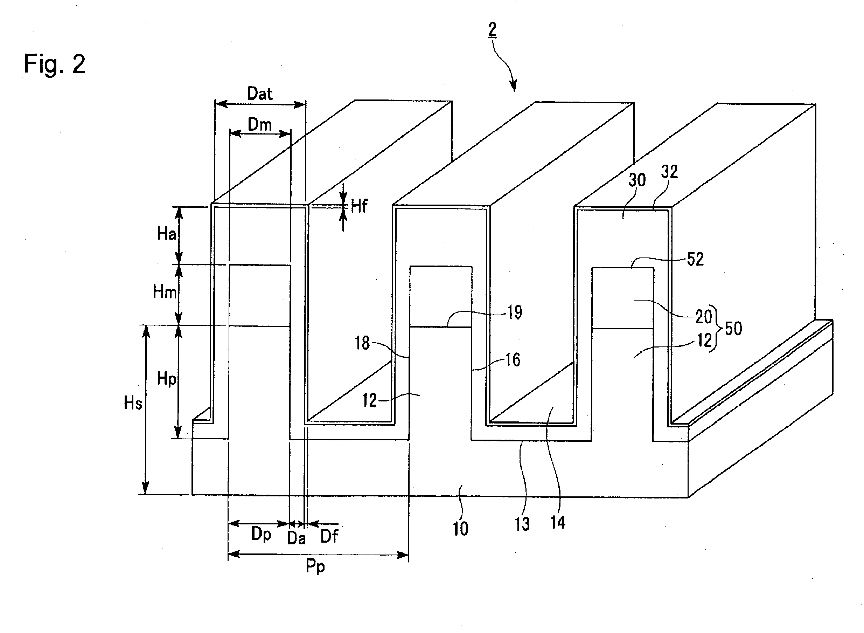

Fig. 2 is a cross-sectional view illustrating a second embodiment of the wire-grid polarizer of the present invention. The wire-grid polarizer 2 comprises a substrate having a plurality of convex stripes 50 with an rectangular cross-sectional shape formed on the surface of an optically transparent substrate 10 in parallel with one another via a flat portion 13 of a groove 14 formed between the convex stripes 50 and at a predetermined pitch Pp of at most a wavelength of visible light; an inorganic oxide layer 30 covering two side surfaces of each convex stripe 50 and a top 52 interposed therebetween, and a flat portion 13 of the substrate between convex stripes 50, so that a void space is formed at a groove 14 between convex stripes 50; and a fluorinated compound layer 32 formed by treating the entire surface of the inorganic oxide layer 30 with a fluorinated compound having a group reactive to the inorganic oxide.

In the wire-grid polarizer 2 of the second embodiment, convex stripes 50 are ones each composed of a convex base portion 12 of the optically transparent substrate 10 and a fine metal wire 20 formed on the convex base portion 12 and constituting a convex upper portion. Here, the convex base portions 12 are integral with and made of the same material as the optically transparent substrate 10.

Pp is a sum of the width Dp of a convex base portion 12 and the width of a groove 14 to be formed between convex stripes 50. Pp is at most a wavelength of visible light, preferably from 30 to 300 nm, more preferably from 50 to 200 nm. When Pp is at most 300 nm, a high s-polarization reflectance is obtainable, and a high polarization degree is obtainable even in a short wavelength region of about 400 nm. Further, a coloration phenomenon by diffraction can be prevented. Further, when Pp is at least 30 nm, a high transmittance is obtainable.

The ratio of Dp to Pp (i.e. Dp/Pp) is preferably from 0.1 to 0.7, more preferably from 0.25 to 0.55. When Dp/Pp is at least 0.1, a high polarization degree is obtainable. By adjusting Dp/Pp to be at most 0.7, coloration of transmitted light by interference can be prevented.

Dp is preferably from 10 to 100 nm, since a metal layer can thereby easily be formed by vapor deposition.

The width Dm of a fine metal wire 20 (metal layer) is preferably from 10 to 100 nm, more preferably from 20 to 80 nm. When Dm is at least 10 nm, the polarization separation function will be sufficiently high. When Dm is at most 100 nm, the transmittance will be sufficiently high.

The ratio of the sum (Da+Df) of the thickness (in the width direction of a convex stripe 50) Da of the inorganic oxide layer 30 covering a side surface of a convex stripe 50 and the thickness (in the width direction of a convex stripe 50) Df of the fluorinated compound layer 32 covering the inorganic oxide layer 30, to the width of a groove 14 (Pp-Dp) (i.e. (Da+Df)/(Pp-Dp)) is preferably at most 0.4, more preferably from 0.01 to 0.3. When (Da+Df)/(Pp-Dp) is at most 0.4, an adequate void space is formed at the groove 14, and the optical properties will be better.

The height Hp of the convex base portions 12 is preferably from 50 to 500 nm, more preferably from 100 to 400 nm. When Hp is at least 50 nm, the polarization separation function will be sufficiently high. When Hp is at most 500 nm, wavelength dispersion of the transmittance can be reduced. Further, when Hp is from 50 to 500 nm, a metal layer can easily be formed by vapor deposition.

The height Hm of fine metal wires 20 (metal layer) is preferably from 15 to 500 nm, more preferably from 15 to 300 nm. When Hm is at least 15 nm, the polarization separation function will be sufficiently high. When Hm is at most 500 nm, wavelength dispersion of the transmittance will be small. Further, when Hm is from 15 to 300 nm, a metal layer can be easily formed.

The thickness (in the height direction of a convex stripe 50) Ha of the inorganic oxide layer 30 covering the top 52 of each convex stripe 50 is at least 30 nm, as mentioned above. Further, the ratio of the thickness Ha of the inorganic oxide layer 30 covering the top 52 of each convex stripe 50 to the width Dat of the inorganic oxide layer 30 covering the top 52 of the convex stripe 50 (i.e. Ha/Dat) is at most 1.0, as mentioned above.

The ratio of the thickness Da (in the width direction of a convex stripe 50) of the inorganic oxide layer 30 covering a side surface of a convex stripe 50 to the above width Dat (i.e. Da/Dat) is preferably at most 0.25, as mentioned above.

In this embodiment, the entire height of a convex stripe is H'=Hm+Hp, and Da is the thickness in the width direction of the inorganic oxide layer covering a side surface, at a position corresponding to a half (H'/2) of the height of the convex stripe. Here, in the illustrated embodiment, Da is constant in the height direction, but it may not be constant.

The thickness (in the height direction of a convex stripe 50) Hf of the fluorinated compound layer 32 covering the inorganic oxide layer 30 covering the top of a convex stripe 50, is preferably from 1 to 30 nm, more preferably from 1 to 20 nm. When Hf is at least 1 nm, the abrasion resistance will be sufficiently high. When Hf is at most 30 nm, it is easy to form a uniform and thin fluorinated compound layer 32.

The thickness Hs of the optically transparent substrate 10 is preferably from 0.5 to 1,000 $\mu$m, more preferably from 1 to 200 $\mu$m.

(Process for producing wire-grid polarizer)

The wire-grid polarizer 2 can be produced by the above-described process ($\beta$).

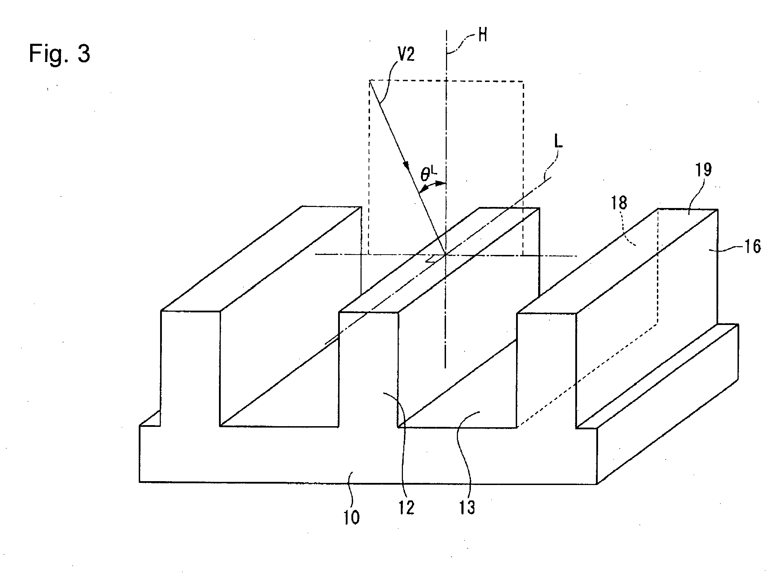

As shown in Fig. 3, fine metal wires 20 can be formed by vapor-depositing a metal or metal compound from a direction V2 which is substantially perpendicular to the length direction of the convex base portions 12 and at an angle $\theta^L$ of from 20 to 50° towards the second side surface 18 to the height direction H of the convex base portions 12, under such a condition that the deposition amount will be from 15 to 100 nm.

The condition for the deposition amount being from 15 to 100 nm is such a condition that at the time of forming a covering layer on the convex base portions, the thickness t of a metal layer to be formed by vapor deposition of a metal or metal compound on the surface of a flat portion where no convex base portion is formed, will be from 15 to 100 nm.

The angle $\theta^L$ may, for example, be adjusted by means of the following vapor deposition apparatus.

A vapor deposition apparatus capable of changing an inclination of an optically transparent substrate 10 which is disposed against a vapor deposition source so that the vapor deposition source is located on the extended line in a direction V2 which is substantially perpendicular to the length direction L of the convex base portions 12 and at an angle $\theta^L$ towards the second side surface 18 to the height direction H of the convex base portions 12.

[Third embodiment]

(Wire-grid polarizer)

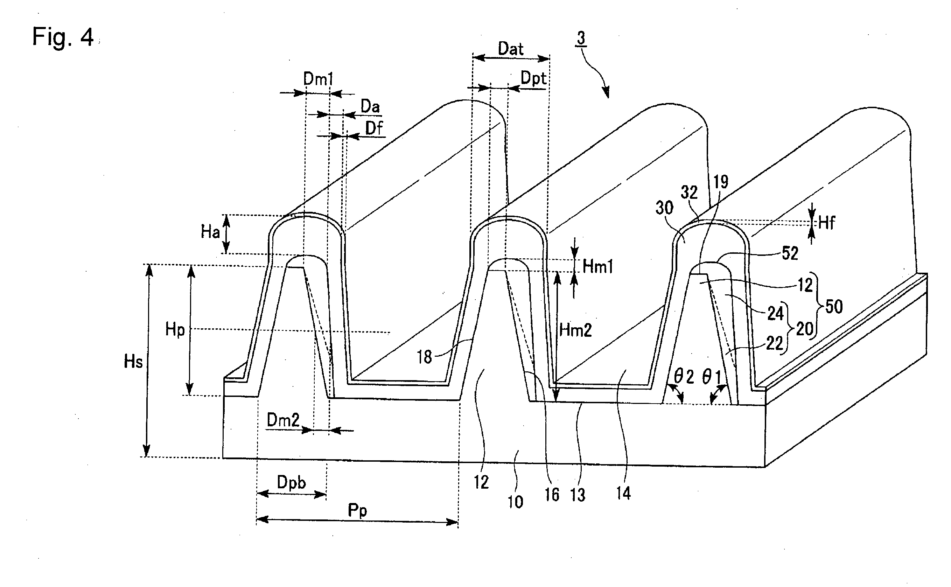

Fig. 4 is a perspective view illustrating a third embodiment of the wire-grid polarizer of the present invention. The wire-grid polarizer 3 comprises a substrate having a plurality of convex stripes 50 formed on the surface of an optically transparent substrate 10 in parallel with one another via a flat portion 13 of a groove 14 formed between the convex stripes 50 and at a predetermined pitch Pp of at most a wavelength of visible light; an inorganic oxide layer 30 covering side surfaces and top 52 of each convex stripe 50, and a flat portion 13 of the substrate between convex stripes 50, so that a void space is formed at a groove 14 between convex stripes 50; and a fluorinated compound layer 32 formed by treating the entire surface of the inorganic oxide layer 30 with a fluorinated compound having a group reactive to the inorganic oxide.

In the wire-grid polarizer 3 of the third embodiment, convex stripes 50 are ones each composed of a convex base portion 12 of the optically transparent substrate 10 and a fine metal wire 20 formed on the convex base portion 12 and constituting a convex upper portion. The cross-sectional shape of the convex stripe 50 is trapezoid, and the upper side of the trapezoid is curved. The convex base portions 12 are integral with and made of the same material as the optically transparent substrate 10. A fine metal wire 20 is composed of a first metal layer 22 covering whole of the first side surface 16 of a convex base portion 12 and a second metal layer 24 covering at least the top 19 of the convex base portion 12 and the surface of the first metal layer 22 on the top 19 side than a half of the height of the convex base portion 12.

Pp is a sum of the width Dpb at the bottom of a convex base portion 12 and the width of a flat portion 13 of a groove 14 to be formed between convex stripes 50. Pp is at most a wavelength of visible light, preferably from 30 to 300 nm, more preferably from 50 to 250 nm. When Pp is at most 300 nm, a high surface s-polarization reflectance is obtainable, and a high polarization degree is obtainable even in a short wavelength region of about 400 nm. Further, when Pp is at least 30 nm, a high transmittance is obtainable.

The ratio of Dpb to Pp (i.e. Dpb/Pp) is preferably from 0.1 to 0.7, more preferably from 0.25 to 0.55. When Dpb/Pp is at least 0.1, a high polarization degree is obtainable. By adjusting Dpb/Pp to be at most 0.7, coloration of transmitted light by interference can be prevented. Dpb is preferably from 10 to 100 nm, since each layer can thereby easily be formed by vapor deposition.

The width Dpt of the top of a convex base portion 12 is preferably at most a half of Dpb, more preferably at most 40 nm, further preferably at most 20 nm. When Dpt is at most a half of Dpb, p-polarization transmittance will be higher, and the angle dependency will be sufficiently low.

The maximum value Dm1 in thickness (in the width direction of a convex base portion 12) of a fine metal wire 20 from a half in the height of the convex base portion 12 to the top 19 (i.e. in an upper half of the convex base portion) is preferably at most 80 nm, more preferably from 20 to 75 nm, further preferably 35 to 55 nm, particularly preferably from 40 to 50 nm. When Dm1 is at least 20 nm, the surface s-polarization reflectance will be sufficiently high. When Dm1 is at most 80 nm, p-polarization transmittance will be sufficiently high.

The maximum value Dm2 in thickness (in the width direction of a convex base portion 12) of a fine metal wire 20 from a half in the height of the convex base portion 12 to the bottom (i.e. in a lower half of the convex base portion) is preferably from 4 to 25 nm, more preferably from 5 to 22 nm. When Dm2 is at least 4 nm, the rear surface s-polarization reflectance will be sufficiently low. When Dm2 is at most 25 nm, p-polarization transmittance will be sufficiently high.

The ratio of Dm1 to the width (Pp-Dpb) (i.e. Dm1/(Pp-Dpb) is preferably from 0.2 to 0.5. When Dm1/(Pp-Dpb) is at least 0.2, s-polarization transmittance will be low, whereby the polarization separation function will be sufficiently high, and wavelength distribution will be small. When Dm1/(Pp-Dpb) is at most 0.5, high p-polarization transmittance will be obtained.

The ratio of Dm1 to Dm2 (i.e. Dm1/Dm2) is preferably from 2.5 to 10, more preferably from 3 to 8. When Dm1/Dm2 is at least 2.5, the polarization separation function will be sufficiently high, and wavelength distribution will be small. When Dm1/Dm2 is at most 10, high p-polarization transmittance will be obtained.

The ratio of the sum (Da+Df) of the thickness (in the width direction of a convex stripe 50) Da of the inorganic oxide layer 30 covering a side surface of a convex stripe 50 and the thickness (in the width direction of a convex stripe 50) Df of the fluorinated compound layer 32 covering the inorganic oxide layer 30, to the width of a groove 14 (Pp-Dpb) (i.e. (Da+Df)/(Pp-Dpb)) is preferably at most 0.4, more preferably from 0.01 to 0.3. When (Da+Df)/(Pp-Dpb) is at most 0.4, an adequate void space is formed at the groove 14, and the optical properties will be better.

The height Hp of the convex base portions 12 is preferably from 120 to 1,000 nm. When Hp is at least 120 nm, the polarization separation function will be sufficiently high. When Hp is at most 1,000 nm, convex base portions 12 will be easily formed. When Hp is at most 300 nm, wavelength distribution will be small. Further, when Hp is from 120 to 300 nm, fine metal wires 20 can easily be formed by vapor deposition.

With respect to the height Hm2 of each fine metal wire 20 located on the lower side (on the optically transparent substrate 10 side) from the top 19 of the convex base portion 12, Hm2/Hp is preferably from 0.8 to 1, more preferably from 0.9 to 1. When Hm2/Hp is at most 1, the polarization separation function will be improved. When Hm2/Hp is at least 0.8, rear surface s-polarization reflectance will be sufficiently low.

With respect to the height Hm1 of each fine metal wire 20 located on the upper side (on the opposite side of the optically transparent substrate 10) from the top 19 of the convex base portion 12, Hm1/Hp is preferably from 0.05 to 0.7, more preferably from 0.1 to 0.5. When Hm1/Hp is at most 0.7, rear surface s-polarization reflectance will be sufficiently low. When Hm1/Hp is at least 0.05, surface s-polarization reflectance will be sufficiently high.

The thickness (in the height direction of a convex stripe 50) Ha of the inorganic oxide layer 30 covering the top 52 of each convex stripe 50 is at least 30 nm, as mentioned above. Further, the ratio of the thickness Ha of the inorganic oxide layer 30 covering the top 52 of each convex stripe 50 to the width Dat of the inorganic oxide layer 30 (i.e. Ha/Dat) is at most 1.0, as mentioned above.

The ratio of the thickness Da (in the width direction of a convex stripe 50) of the inorganic oxide layer 30 covering a side surface of a convex stripe 50 to the above width Dat (i.e. Da/Dat) is preferably at most 0.25, as mentioned above.

In this embodiment, the entire height of a convex stripe is H'=Hm1+Hp, and Da is the thickness in the width direction of the inorganic oxide layer covering a side surface, at a position corresponding to a half (H'/2) of the height of the convex stripe. Here, in the illustrated embodiment, Da is constant in the height direction, but it may not be constant.

The thickness (in the height direction of a convex stripe 50) Hf of the fluorinated compound layer 32 covering the inorganic oxide layer 30 covering the top 52 of a convex stripe 50, is preferably from 1 to 30 nm, more preferably from 1 to 20 nm. When Hf is at least 1 nm, the abrasion resistance will be sufficiently high. When Hf is at most 30 nm, it is easy to form a uniform and thin fluorinated compound layer 32.

The inclination angle θ1 of the first side surface 16 and the inclination angle θ2 of the second side surface are preferably from 30 to 80°. θ1 and θ2 may be the same or different.

The thickness Hs of the optically transparent substrate 10 is preferably from 0.5 to 1,000 μm, more preferably from 1 to 200 μm.

(Process for producing wire-grid polarizer)

The wire-grid polarizer 3 can be produced by the above-described process (β).

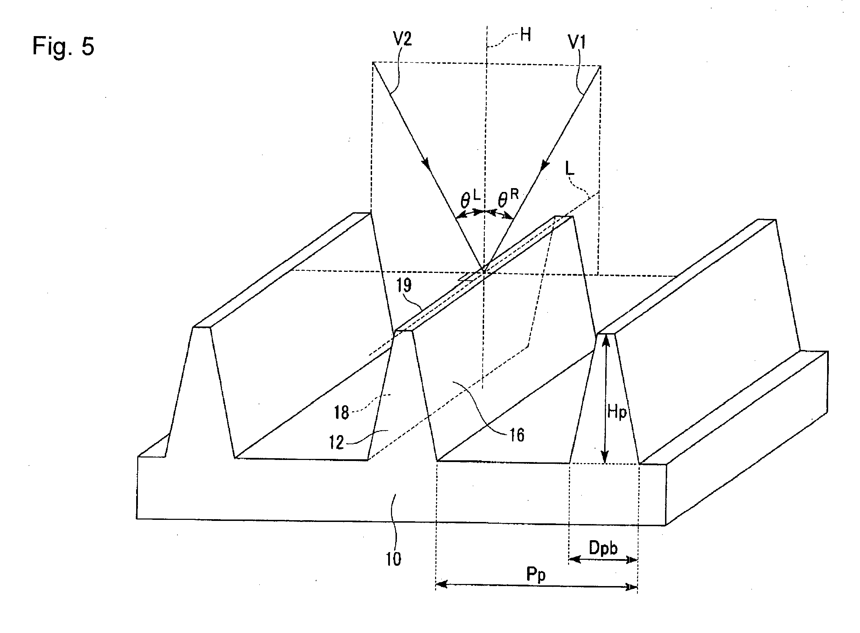

As shown in Fig. 5, a first metal layer 22 can be formed by carrying out a step (1R1) of vapor-depositing a metal or metal compound from a direction V1 which is substantially perpendicular to the length direction of the convex base portions 12 and inclined at an angle $\theta^{R1}$ (°) satisfying the following formula (a) towards the first side surface 16 to the height direction H of the convex base portions 12.

$$\tan (\theta^{R1} \pm 10) = (Pp - Dpb/2)/Hp \qquad (a)$$

The an angle $\theta^{R1}$ (°) in the formula (a) represents an angle for vapor-depositing a metal or metal compound to the bottom side surface of a convex base portion 12 without being hindered by the adjacent convex base portion 12 and is determined by the distance (Pp-Dpb/2) from the surface of the bottom of the convex base portion 12 to the center of the bottom of the adjacent convex base portion 12, and the height Hp of the top of the adjacent convex base portion 12. "$\pm 10$" represents a magnitude of fluctuation.

The an angle $\theta^{R1}$ (°) preferably satisfies $\tan (\theta^{R1} \pm 7) = (Pp - Dpb/2)/Hp$, more preferably satisfies $\tan (\theta^{R1} \pm 5) = (Pp - Dpb/2)/Hp$.

The vapor deposition may be carried out preferably under such a condition that the vapor deposition amount will be from 4 to 25 nm, more preferably under such condition that the vapor deposition amount will be from 5 to 22 nm. The vapor deposition may be carried out by continuously changing the angle $\theta^{R1}$ (°) within a range to satisfy the formula (a) under such a condition that the total vapor deposition amount will be from 4 to 25 nm. In the case of continuously changing the angle $\theta^{R1}$ (°), it is preferred to change the angle so as to reduce the angle.

The condition for the deposition amount being from 4 to 25 nm is such a condition that at the time of forming a covering layer on the convex base portions, the thickness t of a metal layer to be formed by vapor deposition of a metal or metal compound on the surface of a flat portion where no convex base portion is formed, will be from 4 to 25 nm.

After the step (1 R1), as shown in Fig. 5, a second metal layer 24 can be formed by carrying out a step (1 R2) of vapor-depositing a metal or metal compound from a direction V1 which is substantially perpendicular to the length direction L of the convex base portions 12 and inclined at an angle $\theta^{R2}$ (°) satisfying the following formula (b) towards the first side surface 16 to the height direction H of the convex base portions 12.

$$\theta^{R1}+3 \leq \theta^{R2} \leq \theta^{R1}+30 \qquad (b)$$

The an angle $\theta^{R2}$ (°) preferably satisfies $\theta^{R1}+6 \leq \theta^{R2} \leq \theta^{R1}+25$, more preferably satisfies $\theta^{R1}+10 \leq \theta^{R2} \leq \theta^{R1}+20$.

The vapor deposition may be carried out preferably under such a condition that the vapor deposition amount will be larger than that in the step (1R1) and the vapor deposition amount will be from 25 to 70 nm, more preferably under such condition that the vapor deposition amount will be from 30 to 60 nm. The vapor deposition may be carried out by continuously changing the angle $\theta^{R2}$ (°) within a range to satisfy the formula (b) under such a condition that the total vapor deposition amount will be from 25 to 70 nm. In the case of continuously changing the angle $\theta^{R2}$ (°), it is preferred to change the angle so as to reduce the angle.

[Other embodiments]

The wire-grid polarizer of the present invention is not limited to the embodiments shown in the drawings, so long as the thickness Ha of the inorganic oxide layer covering the top of convex stripes is at least 30 nm and the ratio of the thickness Ha to the width Dat (i.e. Ha/Dat) is at most 1.0.

For example, it may be one having a second inorganic oxide layer (such as an aluminum oxide layer) between the optically transparent substrate and the fine metal wires.

Further, the inorganic oxide layer may have a laminated structure constituted by a plurality of inorganic oxide layers of the same or different types.

<Antireflection article>

[Substrate]

The substrate for the antireflection article of the present invention is preferably made of an optically transparent substrate. On at least one surface of the substrate, protrusions (convex portions) are formed each in the form of a cone such as a circular cone or a pyramid, or a frustum based on such a cone, and at a predetermined pitch of at most a wavelength of visible light, and the substrate has a so-called moth-eye structure.

If the pitch exceeds 400 nm, reflectance in a short wavelength region may increase, and therefore, the pitch is preferably at most 400 nm, more preferably at most 300 nm.

The shape of each protrusion is preferably a cone. Further, with respect to the height of protrusions, an aspect ratio being a value obtained by dividing the height of a protrusion by its bottom width, is preferably at most 2, in that the protrusions thereby tend to be scarcely bent and the productivity will be excellent. If the aspect ratio per protrusion or the height is too low, light in a short wavelength side (blue) may be reflected. Therefore, the aspect ratio is preferably at least 0.8.

The optically transparent substrate has optical transparency to a wavelength in a range of from 400 to 800 nm. As the material for the optically transparent substrate, such materials as exemplified for the wire-grid polarizer may be likewise used. The material for the optically transparent substrate may, for example, be a photocured resin, a thermoplastic resin or glass. A photocured resin or a thermoplastic resin is preferred in that protrusions can thereby be formed by an imprinting method, and a photocured resin is particularly preferred in that protrusions can thereby be formed by an imprinting method and it is excellent in heat resistance and durability. The photocured resin is preferably a photocured resin obtainable by photocuring a photocurable composition which is photocurable by photo-controlled radical polymerization, from the viewpoint of the productivity.

Further, the optically transparent substrate may be a laminate, and for example, it may be one comprising a base material such as glass and a surface layer having protrusions made of a photocured resin, formed on the surface of the base material.

[Inorganic oxide layer]

The inorganic oxide layer is a layer which covers at least the top of each protrusion of the optically transparent substrate. The inorganic oxide layer may cover at least a part of a side surface of a protrusion or a surface of the substrate between protrusions (a flat portion between protrusions), but even when it covers only the top of each protrusion, adequate effects (abrasion resistance and optical properties) are obtainable. It is preferred that the inorganic oxide layer directly covers the optically transparent substrate. As the material for the inorganic oxide layer, such materials as exemplified for the wire-grid polarizer may be likewise used. That is, silicon oxide, zirconium oxide, tin oxide, titanium oxide or aluminum oxide may, for example, be mentioned. Silicon oxide, zirconium oxide or tin oxide is preferred in that an antireflection article thereby exhibits high transmittance in the visible light region, and silicon oxide is particularly preferred from the viewpoint of costs.

The thickness Ha (in the height direction of each protrusion) of the inorganic oxide layer covering the top of each protrusion is at least 30 nm. When this thickness is at least 30 nm, the abrasion resistance of the protrusions is excellent. Here, Ha is a difference between the height of the top of a protrusion based on the flat portion between protrusions or the lowest portion between protrusions, and the height of the top of the inorganic oxide layer likewise based on the flat portion between protrusions or the lowest portion between protrusions. Further, preferably, Ha is at most 150 nm. More preferably, Ha is at least 40 nm and at most 120 nm.

Further, the ratio of the thickness Ha of the inorganic oxide layer covering the top of each protrusion to the width Dat of the inorganic oxide layer covering the top of each protrusion (i.e. Ha/Dat) is at most 1.0. When the ratio (i.e. Ha/Dat) is at most 1.0, the inorganic oxide layer covering the top of the protrusions will not be damaged and will serve to increase the abrasion resistance of the protrusions. Here, adopted as the width Dat is a value of the diameter (in a direction parallel with the main surface of the substrate) of the inorganic oxide layer which is present above the top of a protrusion and which covers the top. In a case where such a diameter is not constant in the height direction of the inorganic oxide layer, and/or such a diameter is not constant in the peripheral direction, the maximum value of the diameter is adopted as Dat.

Further, as mentioned above with respect to the wire-grid polarizer, each size is a value obtained by measuring each size with respect to optional five positions in a transmission electron microscopic (TEM) image and then averaging it.

Further, the inorganic oxide layer may cover, in addition to the top of each protrusion, at least a part of a side surface of the protrusion. The ratio of the thickness Da in the width direction of the inorganic oxide layer covering the side surface to the above width Dat (i.e. Da/Dat) is preferably at most 0.25. When the ratio (Da/Dat) is at most 0.25, a void space (a groove) can be sufficiently formed between protrusions, whereby it is possible to increase the abrasion resistance of protrusions, while maintaining the optical properties of the antireflection article to be good. Here, when the entire height of a protrusion is represented by H', Da is a thickness in a width direction of the inorganic oxide layer covering the side surface at a position corresponding to a half of the height (H'/2).

Actual measurement of Da is carried out as follows.

A plurality of vertical cross-sectional images passing through top portions of protrusions are selected from a transmission electron microscopic (TEM) image of a cross-section of an antireflection article. Whether or not such vertical cross-sectional images are those passing through top portions of protrusions, can be judged from the height of the protrusions in the vertical cross-sectional images. At optional five portions at the (H'/2) position in such selected vertical cross-sectional images, the thicknesses of the inorganic oxide layer are measured, and their average value is obtained.

[Fluorinated compound layer]

The fluorinated compound layer is a layer formed by treating the surface of the inorganic oxide layer with a fluorinated compound having a group reactive with the inorganic oxide, and it covers the entire surface of the inorganic oxide layer. The group reactive with the inorganic oxide, the preferred group, the fluorinated compound, the thickness of the fluorinated compound layer, etc. are as exemplified with respect to the wire-grid polarizer. For example, in a case where the fluorinated compound is a fluorinated compound having the after-described hydrolysable silyl group and fluoroalkyl group, the fluorinated compound layer is constituted by a hydrolytic condensate of such a fluorinated compound.

The group reactive with the inorganic oxide may, for example, be a silanol group or a hydrolysable silyl group. From the viewpoint of the reactivity with the inorganic oxide, a hydrolysable silyl group is particularly preferred. The hydrolysable silyl group is a group having an alkoxy group, an amino group, a halogen atom, etc. bonded to a silicon atom and a group capable of cross-linking by forming a siloxane bond by hydrolysis. A trialkoxysilyl group, an alkyldialkoxysilyl group or the like is preferred.

The fluorinated compound is preferably a fluorinated compound having a hydrolysable silyl group and a fluoroalkyl group (which may have an etheric oxygen atom between carbon-carbon atoms) from the viewpoint of the reactivity with the inorganic oxide and a low dynamic friction coefficient.

Further, the dynamic friction coefficient of the fluorinated compound layer as measured in accordance with ASTM D 1894, is preferably at most 0.2, more preferably at most 0.15, from the viewpoint of the abrasion resistance.

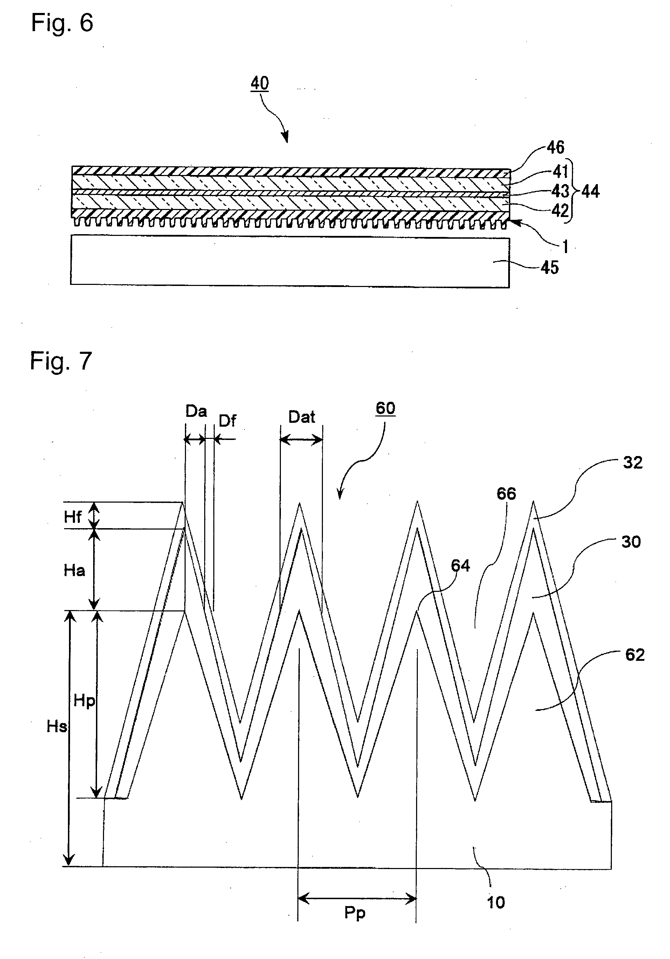

Fig. 7 is a cross-sectional view illustrating an embodiment of the antireflection article of the present invention. The antireflection article 60 comprises a substrate having a plurality of protrusions 62 each made of a cone and having a triangular cross-sectional shape, formed on the surface of an optically transparent substrate 10 at a predetermined pitch of at most a wavelength of visible light; an inorganic oxide layer 30 covering two side surfaces of each protrusion 62, and the top 64 interposed between them, so that a void space is formed at a groove 66 between protrusions 62; and a fluorinated compound layer 32 formed by treating the entire surface of the inorganic oxide layer 30 with a fluorinated compound having a group reactive with the inorganic oxide. Fig. 7 represents a cross-sectional view having the antireflection article cut along a cross section passing through top portions 64 of a plurality of protrusions 62.

In the antireflection article 60 of this embodiment, protrusions 62 are integral with and made of the same material as the optically transparent substrate 10.

Pp is a distance between the bottom surface centers of the protrusions closest to each other. Pp is at most a wavelength of visible light, preferably from 50 to 400 nm, more preferably from 100 to 300 nm. When Pp is at most 400 nm, low reflectance is obtainable in the entire wavelength region of visible light. Further, when Pp is at least 50 nm, the productivity will be excellent.

An aspect ratio being a value obtained by dividing the height Hp of a protrusion by the base (equal to Pp in Fig. 7), is preferably at most 2. If the aspect ratio or height per one protrusion is too low, light in a short wavelength side (blue) may be reflected. Therefore, the aspect ratio is preferably at least 0.8.

The thickness Ha (in the height direction of each protrusion 62) of the inorganic oxide layer 30 covering the top 64 of each protrusion 62 is at least 30 nm, as mentioned above. Further, the ratio of the thickness Ha of the inorganic oxide layer 30 covering the top 64 of each protrusion 62 to the width Dat of the inorganic oxide layer 30 covering the top 64 of each protrusion 62 (i.e. Ha/Dat) is at most 1.0, as mentioned above.

The ratio of the thickness Da (in the width direction of a protrusion 62) of the inorganic oxide layer 30 covering a side surface of the protrusion 62 to the above width Dat (i.e. Da/Dat) is preferably at most 0.25, as mentioned above.

As mentioned above, Da is a thickness in a width direction of the inorganic oxide layer covering the side surface at a position corresponding to a half (Hp/2) of the height Hp of the protrusion 62.

The thickness Hf (in the height direction of a protrusion 62) of the fluorinated compound layer 32 covering the inorganic oxide layer 30 covering the top of the protrusion 62, is preferably from 1 to 30 nm, more preferably from 1 to 20 nm. When Hf is at least 1 nm, the abrasion resistance will be sufficiently high. When Hf is at most 30 nm, it is easy to form a uniform and thin fluorinated compound layer 32.

The thickness Hs of the optically transparent substrate 10 is preferably from 0.5 to 1,000 nm, more preferably from 1 to 200 nm.

<Process for producing antireflection article>

The method for preparing the optically transparent substrate may, for example, be an imprinting method (such as an optical imprinting method or a thermal imprinting method) or a lithography method, preferably an imprinting method in that protrusions can thereby be formed with good productivity and the optically transparent substrate can be made to have a large area, particularly preferably an optical imprinting method in that protrusions can thereby be formed with better productivity and grooves of the mold can be transferred with good precision. As the mold, the base material, etc. to be used for the imprinting method, those exemplified with respect to the wire-grid polarizer may be likely used.

Formation of the inorganic oxide layer and the fluorinated compound layer may be carried out in the same manner as in steps (II) to (III) in the process ($\alpha$) for producing a wire-grid polarizer.

<Advantageous effects>

The fine structure form such as a wire-grid polarizer or an antireflection article of the present invention, has an inorganic oxide layer covering at least the top of each convex portion, and the inorganic oxide layer covering the top of each protrusion, has a thickness Ha of at least 30 nm and a ratio of the above thickness Ha to the width Dat (i.e. Ha/Dat) being at most 1.0. Further, on at least the surface of the inorganic oxide layer, a fluorinated compound layer is formed which is formed by treatment with a fluorinated compound having a group reactive with the inorganic oxide and which suppresses the surface dynamic frictional coefficient to be low. Thus, the fine structure form of the present invention has excellent abrasion resistance.

<Liquid crystal display device>

The liquid crystal display device of the present invention comprises the fine structure form of the present invention.

The liquid crystal display device of the present invention, for example, comprises a liquid crystal panel having a liquid crystal layer interposed between a pair of substrates, a backlight unit, and the wire-grid polarizer of the present invention. Further, the liquid crystal display device of the present invention, for example, has the antireflection article of the present invention on the surface of the liquid crystal panel.

The wire-grid polarizer of the present invention is preferably interposed between the liquid crystal panel and the backlight unit, and it may be integrated with a substrate on the backlight unit side out of the pair of substrates of the liquid crystal panel, or may be disposed on the liquid crystal layer side of a substrate on the backlight unit side out of the pair of substrates of the liquid crystal panel, i.e. inside of the liquid crystal panel.

With a view to reducing the thickness, the liquid crystal display device of the present invention having the wire-grid polarizer, preferably has an absorption type polarizer on the surface of the liquid crystal panel on the side opposite to the side on which the wire-grid polarizer of the present invention is disposed.

Fig. 6 is a cross-sectional view illustrating an example of the liquid crystal display device of the present invention. The liquid crystal display device 40 comprises a liquid crystal display panel 44 having a liquid crystal layer 43 interposed between a pair of substrates 41 and 42, a backlight unit 45, the wire-grid polarizer 1 of the present invention bonded to a surface of the liquid crystal panel so that the surface on the side having fine metal wires formed will be the backlight unit 45 side and the surface on the side having no fine metal wires formed will be the viewing side, and an absorption type polarizer 46 bonded to a surface of the liquid crystal panel 44 on the side opposite to the backlight unit 45 side.

The liquid crystal display device of the present invention having the wire-grid polarizer of the present invention as described above, has an adequate luminance and contrast, since it has the wire-grid polarizer of the present invention which has adequate abrasion resistance and optical properties.

The liquid crystal display device of the present invention having the antireflection article of the present invention, has such an excellent property that the antireflection properties will last, since it has the antireflection article of the present invention which has an adequate abrasion resistance and antireflection properties, whereby it is less likely to be scratched or to receive a fingerprint even by a physical contact or a contact with e.g. a human hand during assembling.

EXAMPLES

Now, the present invention will be described in further detail with reference to Examples, but it should be understood that the present invention is by no means limited to such Examples.

Examples 2, 3, 5, 6, 8 and 9 are Examples of the present invention, and Examples 1, 4, 7, 10 and 11 are Comparative Examples.

(Abrasion resistance a)

A wire-grid polarizer was set on a reciprocating abrasion tester (manufactured by KNT). The surface of the wire-grid polarizer on the side having fine metal wires formed, was rubbed 20 times, 50 times or 200 times with one having a flannel cloth (No. 300) wet with ethanol wound on a forward end of a columnar metal rod having a diameter of 10 mm under such conditions that the load was 50 g, 100 g or 500 g and the speed was 140 cm/min. With respect to the wire-grid polarizer after the test, the total light transmittance was measured by a haze meter (HAZE-GARDII, manufactured by Toyo Seiki Co., Ltd) under a commercially available polarizer and crossed Nichol prism, and light leakage $\Delta T$ was obtained.

(Abrasion resistance b)

An antireflection article was set on a reciprocating abrasion tester (manufactured by KNT). The surface of the antireflection article on the side having protrusions formed, was rubbed 20 times or 50 times with one having a flannel cloth (No. 300) wet with ethanol wound on a forward end of a columnar metal rod having a diameter of 10 mm under such conditions that the load was 500 g and the speed was 140 cm/min. With respect to the antireflection article before and after the test, the haze values were measured by a haze meter (HAZE-GARDII, manufactured by Toyo Seiki Co., Ltd), and the difference ($\Delta$Haze) was obtained.

(Dynamic friction coefficient)

A flat and smooth cured film having the same laminated structure as the wire-grid polarizer and having no fine structure was set on a surface property tester (HEIDON-14S, manufactured by Shinto Scientific Co., Ltd). With respect to the flat and smooth surface, an abrasion resistance test was carried out by using a flat indenter under such conditions that the vertical load was 200 g and the sliding speed was 100 mm/min, and the dynamic friction coefficient was obtained in accordance with ASTM D 1894.

(Preparation of photo-curable resin composition)

Into a 300 mL four-necked flask equipped with a stirrer and a condenser, 60 g of monomer 1 (NK ester A-DPH, manufactured by Shin-Nakamura Chemical Co., Ltd., dipentaerythritol hexaacrylate), 40 g of monomer 2 (NK ester A-NPG, manufactured by Shin-Nakamura Chemical Co., Ltd., neopentyl glycol diacrylate) and 4.0 g of photopolymerization initiator 1 (IRGACURE 907, Ciba Specialty Chemicals) were put. In such a state that the interior of the flask was kept at ordinary temperature and light-shielded, the mixture was stirred for one hour and homogenized to obtain a photocurable composition having a viscosity of 140 mPa·s.

[Example 1]

A wire-grid polarizer 2 as shown in Fig. 2 was produced in the following procedure.

(Step (I'))

The photo-curable resin composition was applied by a spin coating method on the surface of a high transmission polyethylene terephthalate (PET) film (COSMOSHINE A4300, manufactured by Toyobo Co., Ltd., 100 mm $\times$ 100 mm $\times$ 100 $\mu$m in thickness), to form a coating film of the photo-curable resin composition having a thickness of about 5 $\mu$m.
Then, by means of a rubber roll, the coating film-attached PET film was pressed at 25°C against a nanoimprinting mold having a plurality of grooves formed on its surface, so that the coating film of the photo-curable resin composition would be in contact with the grooves of the mold.
While maintaining such a state, light of a high pressure mercury lamp (frequency: from 1.5 kHz to 2.0 kHz, main wavelength lights: 255 nm, 315 nm and 365 nm, irradiation energy at 365 nm: 1,000 mJ) was applied from the PET film side, for 15 seconds to cure the photo-curable resin composition, and then, the nanoimprinting mold was slowly separated to prepare a substrate (Pp: 140 nm, Dp: 70 nm and Hp: 160 nm) having a plurality of convex base portions 12 corresponding to the grooves of the nanoimprinting mold, formed on one surface of the optically transparent substrate 10.
On the convex base portions 12 of the substrate, aluminum was vapor-deposited by an oblique angle vapor deposition method to form fine metal wires 20 (Hm: 100 nm, Dm: 70 nm).

(Step (II))

On an in-line sputtering apparatus (Nisshin seiki Co., Ltd.) equipped with a road lock mechanism, silicon oxide was mounted as a target. In the sputtering apparatus, the substrate having fine metal wires 20 formed was set, and silicon oxide was vapor-deposited from the direction perpendicular to the surface of the fine metal wires 20 side, to form an inorganic oxide layer 30 made of silicon oxide.

The sizes (average values at 5 portions) obtained from the TEM image of the cross-section were Da: 6.0 nm, Ha: 22.0 nm and Dat: 58.0 nm.

(Step (III))

In a solution (concentration: 0.1 mass%) prepared by diluting a fluorinated compound (Optool DSX, manufactured by Daikin Industries, Ltd.) having a hydrolysable silyl group and a fluoroalkyl group (having an etheric oxygen atom between carbon-carbon atoms) with a fluorinated solvent (CT-Solv. 100, manufactured by Asahi Glass Co., Ltd., chemical formula: $C_6F_{13}OCH_3$), the substrate having the fine metal wires 20 and the inorganic oxide layer 30 formed thereon was immersed, then withdrawn and immediately rinsed with a fluorinated solvent (CT-Solv. 100, manufactured by Asahi Glass Co., Ltd., chemical formula: $C_6F_{13}OCH_3$). It was placed in a constant temperature and constant humidity tank at 60°C under a relative humidity of 90% for one hour to form a fluorinated compound layer 32 (Df and Hf: 2 nm) on the surface of the inorganic oxide layer 30 thereby to obtain a wire-grid polarizer 2.
With respect to the obtained wire-grid polarizer 2, evaluation of the abrasion resistance _a_ was carried out. Further, with respect to a flat and smooth cured film having the same laminated structure, measurement of the dynamic friction coefficient was carried out. The results are shown in Table 1.

[Examples 2, 3, 5 and 6]

A wire-grid polarizer 2 was obtained in the same manner as in Example 1 except that the sizes Pp, Dp and Hp of the substrate prepared in step (I') were adjusted to the values disclosed in Table 1, and the vapor deposition time (sputtering time) in step (II) was changed to form the inorganic oxide layer 30 having the sizes (Ha, Da and Dat) as disclosed in Table 1.
With respect to the obtained wire-grid polarizer 2, evaluation of the abrasion resistance _a_ was carried out. Further, with respect to a flat and smooth cured film having the same laminated structure, measurement of the dynamic friction coefficient was carried out. The results are shown in Table 1.

[Example 4]

A wire-grid polarizer was obtained in the same manner as in Example 3 except that step (III) was not carried out.
With respect to the wire-grid polarizer having no fluorinated compound layer 32, evaluation of the abrasion resistance I was carried out. Further, with respect to a flat and smooth cured film having the same laminated structure, measurement of the dynamic friction coefficient was carried out. The results are shown in Table 1.

[Example 7]

A wire-grid polarizer was obtained in the same manner as in Example 1 except that steps (II) and (III) were not carried out.
With respect to the wire-grid polarizer having no inorganic oxide layer 30 and no fluorinated compound layer 32, evaluation of the abrasion resistance _a_ was carried out. Further, with respect to a flat and smooth cured film having the same laminated structure, measurement of the dynamic friction coefficient was carried out. The results are shown in Table 1.

[Example 8]

A wire-grid polarizer 2 was obtained in the same manner as in Example 3 except that the sizes Pp, Dp and Hp of the substrate prepared in step (I') were adjusted to the values disclosed in Table 1.
With respect to the obtained wire-grid polarizer 2, evaluation of the abrasion resistance _a_ was carried out. Further, with respect to a flat and smooth cured film having the same laminated structure, measurement of the dynamic friction coefficient was carried out. The results are shown in Table 1.

[Table 1]

| | Convex base portion | | | Inorganic oxide layer | | | | | Presence or absence of fluorinated compound layer | ΔT (%) | | Dynamic friction coefficient (flat and smooth surface) |
|---|---|---|---|---|---|---|---|---|---|---|---|---|
| | Pp (nm) | Dp (nm) | Hp (nm) | Ha (nm) | Da (nm) | Dat (nm) | Ha/Dat | Da/Dat | | 500 g × 50 times | 500 g × 200 times | |
| Ex. 1 | 140 | 70 | 160 | 22.0 | 6.0 | 58.0 | 0.38 | 0.10 | Present | 0.05 | 6.49 | 0.13 |
| Ex. 2 | 140 | 70 | 160 | 34.9 | 10.1 | 74.0 | 0.47 | 0.14 | Present | 0.02 | 1.88 | 0.13 |
| Ex. 3 | 140 | 70 | 195 | 48.8 | 14.2 | 89.4 | 0.55 | 0.16 | Present | 0.05 | 0.03 | 0.13 |
| Ex. 4 | 140 | 70 | 195 | 48.8 | 14.2 | 89.4 | 0.55 | 0.16 | Absent | 0.48 | 3.19 | 0.54 |
| Ex. 5 | 140 | 70 | 195 | 83.0 | 20.7 | 114.1 | 0.73 | 0.18 | Present | 0.01 | 0.01 | 0.13 |
| Ex. 6 | 140 | 70 | 195 | 114.5 | 12.7 | 127.2 | 0.90 | 0.10 | Present | 0.14 | 0.33 | 0.13 |
| Ex. 7 | 140 | 70 | 195 | 0 | 0 | 0 | 0 | 0 | Absent | 6.8*1 | 11.2*2 | 0.54 |
| Ex. 8 | 120 | 60 | 400 | 60.5 | 5.6 | 107.0 | 0.57 | 0.05 | Present | 0.02 | 0.01 | 0.13 |

In Table, *1 and *2 represent the measured results under the following conditions
*1: Measured at 50 g × 20 times
*2: Measured at 100 g × 20 times

As shown in Table 1, in Examples 2, 3, 5, 6 and 8 wherein the thickness of the inorganic oxide layer was at least 30 nm and the ratio (Ha/Dat) of the thickness Ha to the width Dat was at most 1.0, light leakage ΔT was small and the abrasion resistance was excellent even under a high load condition of 500 g × 200 times. Further, it was found that particularly when the thickness Ha became at least 40 nm, light leakage ΔT became to be abruptly suppressed.

Whereas, in Example 1 wherein the thickness Ha was small, in Example 4 wherein no fluorinated compound layer 32 was formed, or in Example 7 wherein no inorganic oxide layer 30 and no fluorinated compound layer were formed, large light leakage ΔT was observed.

Further, particularly in Example 8, Hp was large as compared with other Examples, and probably for this reason, the inorganic oxide layer was not formed so much on the side surface of convex stripes (protrusions), and the thickness (Da) and the ratio (Da/Dat) were small. Nevertheless, light leakage ΔT was very low, and the abrasion resistance was adequate. From this, it is understood that so long as the inorganic oxide layer covers at least the top of convex stripes (protrusions), the thickness Ha is at least 30 nm and the ratio (Ha/Dat) of the thickness Ha to the width Dat is at most 1.0, an adequate abrasion resistance will be obtainable.

[Example 9]

An antireflection structure 60 as shown in Fig. 7 was produced in the following procedure.

A photo-curable resin composition was applied by a spin coating method on the surface of a high transmission polyethylene terephthalate (PET) film (COSMOSHINE A4300, manufactured by Toyobo Co., Ltd., 100 mm × 100 mm × 100 μm in thickness), to form a coating film of the photo-curable resin composition having a thickness of about 5 μm.

Then, by means of a rubber roll, the coating film-attached PET film was pressed at 25°C against a nanoimprinting mold having a plurality of grooves (cone shape) formed on its surface so that the bottom of each cone had a hexagonal fine structure, so that the coating film of the photo-curable resin composition would be in contact with the grooves of the mold.

While maintaining such a state, light of a high pressure mercury lamp (frequency: from 1.5 kHz to 2.0 kHz, main wavelength lights: 255 nm, 315 nm and 365 nm, irradiation energy at 365 nm: 1,000 mJ) was applied from the PET film side, for 15 seconds to cure the photo-curable resin composition, and then, the nanoimprinting mold was slowly separated to prepare a substrate having a plurality of protrusions 62 (pitch: 300 nm, height of protrusions: 188.9 nm) corresponding to the grooves of the nanoimprinting mold, formed on one surface of the optically transparent substrate 10.

On an in-line sputtering apparatus (Nisshin seiki Co., Ltd.) equipped with a road lock mechanism, silicon oxide was mounted as a target. In the sputtering apparatus, the substrate having protrusions 62 formed was set, and silicon oxide was vapor-deposited from the direction perpendicular to the surface of the protrusions 62 side, to form an inorganic oxide layer 30 made of silicon oxide.

The sizes (average values at 5 portions) obtained from the TEM image of the cross-section were Da: 33.3 nm, Ha: 100.0 nm and Dat: 200.0 nm.

In a solution (concentration: 0.1 mass%) prepared by diluting a fluorinated compound (Optool DSX, manufactured by Daikin Industries, Ltd.) having a hydrolysable silyl group and a fluoroalkyl group (having an etheric oxygen atom between carbon-carbon atoms) with a fluorinated solvent (CT-Solv. 100, manufactured by Asahi Glass Co., Ltd., chemical formula: $C_6F_{13}OCH_3$), the substrate having the protrusions and the inorganic oxide layer formed thereon was immersed, then withdrawn and immediately rinsed with a fluorinated solvent (CT-Solv. 100, manufactured by Asahi Glass Co., Ltd., chemical formula: $C_6F_{13}OCH_3$). It was placed in a constant temperature and constant humidity tank at 60°C under a relative humidity of 90% for one hour to form a fluorinated compound layer 32 (Df and Hf: 2 nm) on the surface of the inorganic oxide layer 30 thereby to obtain an antireflection structure 60.

With respect to the obtained antireflection structure 60, evaluation of the abrasion resistance b was carried out. The results are shown in Table 2.

[Examples 10 and 11]

An antireflection structure was obtained in the same manner as in Example 9 except that the vapor deposition time (sputtering time) was changed to form an inorganic oxide layer having the sizes (Ha, Da and Dat) as disclosed in Table 2.

With respect to the obtained antireflection structure, evaluation of the abrasion resistance b was carried out. The results are shown in Table 2.

[Table 2]

| | Protrusions | | Inorganic oxide layer | | | | | Presence or absence of fluorinated compound layer | ΔHaze (%) | |
|---|---|---|---|---|---|---|---|---|---|---|
| | Pp (nm) | Hp (nm) | Ha (nm) | Da (nm) | Dat (nm) | Ha/Dat | Da/Dat | | 20 times | 50 times |
| Ex. 9 | 300 | 188.9 | 100.0 | 33.3 | 200.0 | 0.50 | 0.17 | Present | 0.39 | 0.92 |
| Ex. 10 | 300 | 188.9 | 22.2 | 11.1 | 77.8 | 0.29 | 0.14 | Present | 0.93 | 1.63 |
| Ex. 11 | 300 | 188.9 | 44.4 | 22.2 | 111.1 | 0.40 | 0.20 | Absent | 1.19 | 2.42 |

As shown in Table 2, in Example 9 wherein the thickness Ha of the inorganic oxide layer was at least 30 nm and the ratio (Ha/Dat) of the thickness Ha to the width Dat was at most 1.0, ΔHaze was as small as at most 1, and the abrasion resistance was excellent.

Whereas in Example 10 wherein the thickness Ha was thin, ΔHaze became larger than 1 at the number of abrasion times being 50 times. Further, in Example 11 wherein no fluorinated compound layer was formed, ΔHaze became larger than 1 at the number of abrasion times being 20 times and 50 times.

INDUSTRIAL APPLICABILITY

The fine structure form of the present invention is useful as e.g. a wire-grid polarizer or an antireflection article for an image display device such as a liquid crystal display device, a rear projection television or a front projector. Further, the fine structure form of the present invention is useful as a mold for nanoimprinting.

The entire disclosure of Japanese Patent Application No. 2011-035641 filed on February 22, 2011 including specification, claims, drawings and summary is incorporated herein by reference in its entirety.

REFERENCE SYMBOLS

1: Wire-grid polarizer
2: Wire-grid polarizer
3: Wire-grid polarizer
10: Optically transparent substrate
20: Fine metal wires
30: Inorganic oxide layer
32: Fluorinated compound layer
40: Liquid crystal display device
44: Liquid crystal panel
45: Backlight unit
50: Convex stripes
60: Antireflection article
62: Protrusions

**Claims**

1. A fine structure form comprising
   a substrate having convex portions formed at a pitch of at most a visible light wavelength on at least one surface thereof,
   an inorganic oxide layer covering at least the top of the convex portions, and
   a fluorinated compound layer formed by treating at least the surface of the inorganic oxide layer with a fluorinated compound having a group reactive with the inorganic oxide,
   wherein the inorganic oxide layer covering the top of the convex portions has a thickness Ha of at least 30 nm and a ratio of the thickness Ha to the width Dat (i.e. Ha/Dat) of at most 1.0.

2. The fine structure form according to Claim 1, wherein the inorganic oxide layer covers at least a part of a side surface of the convex portions, and the inorganic oxide layer covering the side surface has a ratio of the thickness Da in the width direction to the width Dat (i.e. Da/Dat) of at most 0.25.

3. The fine structure form according to Claim 1 or 2, wherein the fluorinated compound layer has a thickness Hf of from 1 to 30 nm.

4. The fine structure form according to any one of Claims 1 to 3, wherein the fluorinated compound has a hydrolysable silyl group and a fluoroalkyl group (which may have an etheric oxygen atom between carbon-carbon atoms).

5. A wire-grid polarizer comprising the fine structure form as defined in any one of Claims 1 to 4, wherein the convex portions are convex stripes formed in parallel with one another, and on at least the top of the convex stripes, a plurality of fine metal wires made of a metal layer and separated from one another, are formed.

6. An antireflection article comprising the fine structure form as defined in any one of Claims 1 to 4.

7. An antireflection article comprising the fine structure form as defined in any one of Claims 1 to 4, wherein the substrate has a moth-eye structure.

8. The antireflection article according to Claim 7, wherein the substrate is an optically transparent substrate.

9. A liquid crystal display device comprising the fine structure form as defined in any one of Claims 1 to 4.

10. A liquid crystal display device comprising
a liquid crystal panel having a liquid crystal layer interposed between a pair of substrates,
a backlight unit, and
the wire-grid polarizer as defined in Claim 5.

Fig. 1

EP 2 680 048 A1

Fig. 2

Fig. 3

Fig. 4

Fig. 5

Fig. 6

Fig. 7

<table>
<tr><td colspan="2" align="center">**INTERNATIONAL SEARCH REPORT**</td><td>International application No.<br>PCT/JP2012/054018</td></tr>
</table>

A. CLASSIFICATION OF SUBJECT MATTER
*G02B5/30*(2006.01)i, *B32B9/00*(2006.01)i, *G02B1/11*(2006.01)i, *G02F1/1335*
(2006.01)i

According to International Patent Classification (IPC) or to both national classification and IPC

B. FIELDS SEARCHED

Minimum documentation searched (classification system followed by classification symbols)
G02B5/30, B32B9/00, G02B1/11, G02F1/1335

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-73722 A  (Sony Corp.),<br>17 March 1998 (17.03.1998),<br>entire text; all drawings<br>(Family: none) | 1-10 |
| A | JP 2006-507517 A  (Moxtek, Inc.),<br>02 March 2006 (02.03.2006),<br>entire text; all drawings<br>& US 2003/0227678 A1    & WO 2003/096105 A1<br>& TW 250197 B            & CN 1653373 A<br>& AU 2003241390 A        & AU 2003241390 A1 | 1-10 |
| A | JP 2007-178763 A  (Seiko Epson Corp.),<br>12 July 2007 (12.07.2007),<br>entire text; all drawings<br>(Family: none) | 1-10 |

[X] Further documents are listed in the continuation of Box C.        [ ] See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>13 March, 2012 (13.03.12) | Date of mailing of the international search report<br>27 March, 2012 (27.03.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/054018

| C (Continuation). | DOCUMENTS CONSIDERED TO BE RELEVANT | |
| --- | --- | --- |
| Category* | Citation of document, with indication, where appropriate, of the relevant passages | Relevant to claim No. |
| A | JP 2010-210829 A (Asahi Kasei E-materials Corp.), 24 September 2010 (24.09.2010), entire text; all drawings (Family: none) | 1-10 |

Form PCT/ISA/210 (continuation of second sheet) (July 2009)

**EP 2 680 048 A1**

**Patent documents cited in the description**

- JP 2009069382 A
- JP 2011035641 A